# EUROPÄISCHE PATENTSCHRIFT

(11) **EP 3 590 322 B1**
(45) Veröffentlichungstag und Bekanntmachung des Hinweises auf die Patenterteilung: **16.06.2021**
(21) Anmeldenummer: 19184001.6
(22) Anmeldetag: 02.07.2019
(51) Int. Cl.: A01D 78/10

(54) **LANDWIRTSCHAFTLICHES ARBEITSGERÄT**
AGRICULTURAL TOOL
APPAREIL DE TRAVAIL AGRICOLE

(30) Priorität: 02.07.2018 DE 102018116014
(43) Veröffentlichungstag der Anmeldung: 08.01.2020
(73) Patentinhaber: CLAAS Saulgau GmbH, 88348 Bad Saulgau (DE)
(72) Erfinder: Frick, Clemens, 88356 Ostrach (DE)

(56) Entgegenhaltungen:
- EP-A1- 2 253 186
- WO-A1-2012/110743
- DE-A1- 10 258 661
- DE-A1-102004 020 609
- US-A1- 2003 041 584

## Beschreibung

Die Erfindung betrifft ein landwirtschaftliches Arbeitsgerät.

Aus der Praxis ist eine Vielzahl unterschiedlicher landwirtschaftlicher Arbeitsgeräte bekannt. So sind Heuwerbungsmaschinen bekannt, die als Schwader oder Wender ausgebildet sein können. Ferner sind als Mäheinheiten ausgebildete landwirtschaftliche Arbeitsgeräte bekannt.

Es besteht Bedarf an zunehmend größeren Arbeitsbreiten solcher landwirtschaftlichen Arbeitsgeräte. Dabei müssen die landwirtschaftlichen Arbeitsgeräte zwischen einer Arbeitsstellung, in welcher die maximale Arbeitsbreite gewünscht ist, und einer Transportstellung verlagert werden, wobei in der Transportstellung eine möglichst kompakte Abmessung des landwirtschaftlichen Arbeitsgeräts gewünscht ist, um einen unproblematischen Straßentransport des landwirtschaftlichen Arbeitsgeräts zu gewährleisten.

Aus der Praxis bekannte landwirtschaftliche Arbeitsgeräte verfügen über einen Rahmen sowie über mehrere Ausleger. So verfügen aus der Praxis bekannte landwirtschaftliche Arbeitsgeräte über mindestens einen ersten Ausleger, der zur Überführung des landwirtschaftlichen Arbeitsgeräts zwischen der Transportstellung und der Arbeitsstellung relativ zum Rahmen verlagerbar ist, sowie mindestens einen zweiten Ausleger, der an dem jeweiligen ersten Ausleger angreift und zur Überführung des landwirtschaftlichen Arbeitsgeräts zwischen der Transportstellung und der Arbeitsstellung relativ zum Rahmen und relativ zum jeweiligen ersten Ausleger verlagerbar ist. Der jeweilige erste Ausleger ist, bezogen auf eine Längsachse des landwirtschaftlichen Arbeitsgeräts bzw. des Rahmens, innen und der jeweilige zweite Ausleger ist, bezogen auf diese Längsachse des landwirtschaftlichen Arbeitsgeräts bzw. des Rahmens, außen positioniert, nämlich in der Arbeitsstellung des landwirtschaftlichen Arbeitsgeräts. Zumindest an dem jeweiligen zweiten Ausleger ist mindestens eine Arbeitseinheit angebracht.

Aus der DE 10 2007 035 407 A1 ist ein als Heuwerbungsmaschine ausgebildetes, landwirtschaftliches Arbeitsgerät mit einem Rahmen bekannt, wobei am Rahmen zu beiden Seiten desselben mehrere als Rechkreisel ausgebildete Arbeitseinheiten angebunden sind. Die Arbeitseinheiten sind dabei an Auslegern befestigt, wobei die Ausleger zwischen einer Transportstellung und einer Arbeitsstellung relativ zum Rahmen verlagert werden können.

Aus der EP 1 949 781 A1 ist eine weitere Heuwerbungsmaschine bekannt. Nach diesem Stand der Technik sind als Rechkreisel ausgebildete Arbeitseinheiten an einem Ausleger gelagert, wobei der jeweilige Rechkreisel relativ zum jeweiligen Ausleger über eine Laufkatze verlagert werden kann.

Eine weitere Heuwerbungsmaschine ist aus der EP 1 095 555 B1 bekannt. Auch diese Heuwerbungsmaschine verfügt über einen Rahmen, über Ausleger sowie über Arbeitseinheiten. Die Ausleger sowie Arbeitseinheiten können relativ zum Rahmen verlagert werden, um die Heuwerbungsmaschine zwischen einer Arbeitsstellung und einer Transportstellung zu überführen.

Das Dokument DE 10 2004 020 609 A1 offenbart einen Klapprahmen für eine Landmaschine mit großer Arbeitsbreite, mit einem Mittelrahmen, der quer zur Arbeitsrichtung der Landmaschine angeordnet ist, sowie jeweils links und rechts am Mittelrahmen angeordnete Klappteile, die an einem Gelenk mittels eines oder mehrerer Hydraulikzylinder von einer Arbeitsstellung in eine Transportstellung schwenkbar sind, wobei die Klappteile teleskopartig längenveränderlich und drehfest ausgebildet sind und zur Längenveränderung der Klappteile in jedem Klappteil zum Verschieben der Schiebeteile vorzugsweise ein einfachwirkender Hydraulikzylinder angeordnet ist.

Hiervon ausgehend liegt der vorliegenden Erfindung die Aufgabe zugrunde, ein neuartiges landwirtschaftliches Arbeitsgerät zu schaffen, welches einerseits in der Arbeitsstellung eine maximale Arbeitsbreite und andererseits in der Transportstellung eine möglichst kompakte Abmessung aufweist.

Diese Aufgabe wird durch ein landwirtschaftliches Arbeitsgerät nach Anspruch 1 gelöst.

Beim erfindungsgemäßen Arbeitsgerät ist der jeweilige erste Ausleger um ein Gelenk relativ zum Rahmen schwenkbar oder klappbar.

Der jeweilige zweite Ausleger ist beim erfindungsgemäßen Arbeitsgerät relativ zum jeweiligen ersten Ausleger translatorisch verlagerbar, nämlich teleskopierbar.

Die jeweilige am jeweiligen zweiten Ausleger gelagerte Arbeitseinheit ist beim erfindungsgemäßen Arbeitsgerät relativ zum jeweiligen zweiten Ausleger translatorisch verlagerbar.

Bei dem erfindungsgemäßen landwirtschaftlichen Arbeitsgerät ist der jeweilige erste, innere Ausleger um ein Gelenk relativ zum Rahmen schwenkbar oder klappbar. Der jeweilige zweite, äußere Ausleger ist relativ zum jeweiligen ersten, inneren Ausleger teleskopierbar. Die am jeweiligen zweiten, äußeren Ausleger gelagerte Arbeitseinheit ist relativ zum jeweiligen zweiten Ausleger translatorisch verlagerbar. Hierdurch kann mit einfachen Mitteln einerseits in der Arbeitsstellung eine maximale Arbeitsbreite und andererseits in der Transportstellung eine möglichst kompakte Abmessung realisiert werden.

Durch die Anordnung des Gelenks zwischen dem Rahmen und dem inneren Ausleger, genügen vorteilhaft geringe Hebewinkel des Auslegers, um an der Arbeitseinheit eine ausreichende Bodenfreiheit am Vorgewende zu erreichen.

Das Gelenk ist vorzugsweise so nahe am Rahmen angeordnet, dass der gemeinsame Schwerpunkt der Arbeitseinheit und der Ausleger in der aufrecht stehenden Transportstellung einen größeren Abstand zum Rahmen aufweist, sodass die Gewichtskraft ein Drehmoment um das Gelenk erzeugt, welches die Arbeitseinheit in die Arbeitsstellung zieht bzw. schwenkt. Aufgrund dieser vorteilhaften Anordnung wird nur ein einfachwirkender Betätigungszylinder benötigt, um die Arbeitseinheit zusammen mit den Auslegern von der Arbeitsstellung in die aufrechte Transportstellung zu verlagern. Dieser einfachwirkende Betätigungszylinder wird vorzugsweise als Zugzylinder ausgeführt.

Nach einer vorteilhaften Weiterbildung der Erfindung ist der jeweilige erste Ausleger ein starrer Träger, der mit einem ersten Ende über das jeweilige Gelenk am Rahmen angelenkt ist, und an dessen gegenüberliegendem zweiten Ende der jeweilige zweite Ausleger teleskopierbar ist. Der jeweilige zweite Ausleger ist ebenfalls ein starrer Träger, der am zweiten Ende des jeweiligen ersten Auslegers gegenüber dem jeweiligen ersten Ausleger teleskopisch einfahrbar und ausfahrbar ist. Diese Ausführung ist einfach, robust und gewährleistet einerseits in der Arbeitsstellung eine maximale Transportbreite und andererseits in der Transportstellung eine möglichst kompakte Abmessung.

Vorzugsweise ist in der Transportstellung der jeweilige zweite Ausleger derart in den jeweiligen ersten Ausleger eingefahren, dass zwischen denselben eine Überdeckung von etwa 50 % - 70 %, vorzugsweise von etwa 100 %, besteht. Vorzugsweise ist in der Arbeitsstellung der jeweilige zweite Ausleger derart aus dem jeweiligen ersten Ausleger ausgefahren, dass zwischen denselben eine Überdeckung von minimal etwa 400 Millimetern, vorzugsweise von minimal etwa 600 Millimetern, besteht. Dies ist bevorzugt, um in der Arbeitsstellung eine maximale Arbeitsbreite und in der Transportstellung möglichst kompakte Abmessungen zu gewährleisten, wobei in der Arbeitsposition eine stabile Führung sichergestellt ist.

Vorzugsweise greift an dem jeweiligen ersten Ausleger und an dem Rahmen ein Schwenkzylinder oder Klappzylinder an. An dem jeweiligen zweiten Ausleger und an dem jeweiligen ersten Ausleger greift ein Teleskopzylinder an. Hiermit kann sowohl der erste Ausleger relativ zum Rahmen als auch der zweite Ausleger relativ zum ersten Ausleger vorteilhaft zwischen der Transportstellung und der Arbeitsstellung verlagert werden.

Bevorzugte Weiterbildungen der Erfindung ergeben sich aus den Unteransprüchen und der Beschreibung. Ausführungsbeispiele der Erfindung werden, ohne hierauf beschränkt zu sein, an Hand der Zeichnung näher erläutert. Dabei zeigt:
- Fig. 1: einen Ausschnitt aus einem als Heuwerbungsmaschine ausgebildeten, erfindungsgemäßen landwirtschaftlichen Arbeitsgeräts in einem ersten Zustand, nämlich in Arbeitsstellung;
- Fig. 2: das Detail II der Fig. 1;
- Fig. 2a: einen erfindungsgemäßen Ausleger in Transportstellung;
- Fig. 3: einen Ausschnitt aus dem als Heuwerbungsmaschine ausgebildeten, erfindungsgemäßen landwirtschaftlichen Arbeitsgeräts in einem zweiten Zustand, nämlich in Transportstellung;
- Fig. 4: einen Ausschnitt aus dem als Heuwerbungsmaschine ausgebildeten, erfindungsgemäßen landwirtschaftlichen Arbeitsgeräts in einem dritten Zustand, nämlich in Vorgewendestellung.

Die Erfindung betrifft ein landwirtschaftliches Arbeitsgerät.

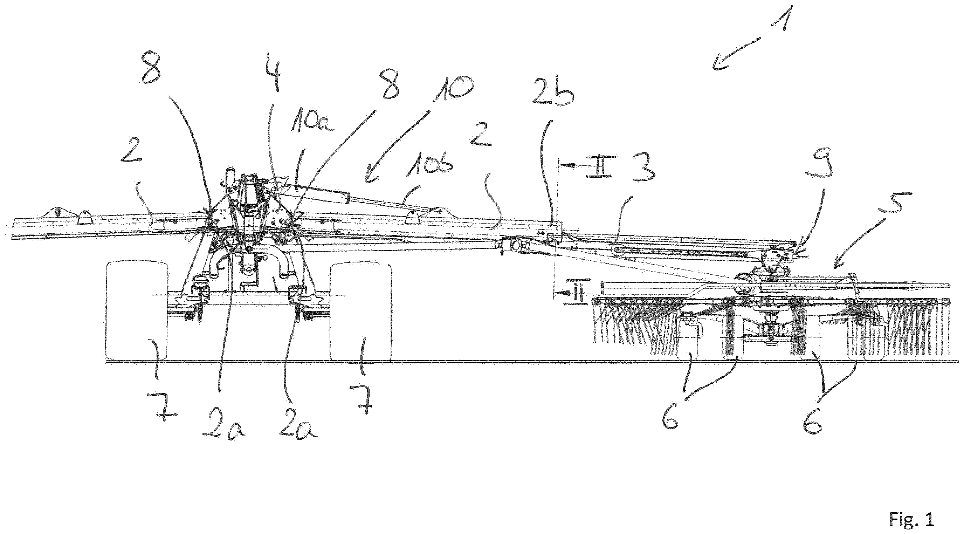

Fig. 1 zeigt stark schematisiert einen Ausschnitt aus einem landwirtschaftlichen Arbeitsgerät 1 im Bereich von Auslegern 2, 3 sowie im Bereich eines Rahmens 4.

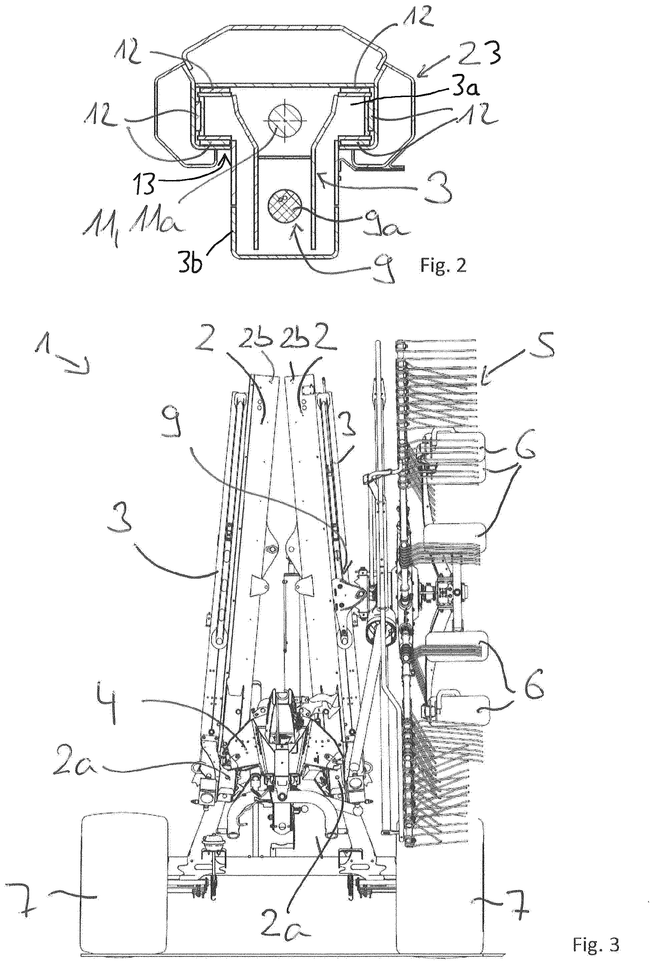

Fig. 1 zeigt den Ausschnitt aus dem Arbeitsgerät 1 in einer Arbeitsstellung desselben. Fig. 3 zeigt das Arbeitsgerät in einer Transportstellung desselben.

Ein erster Ausleger 2 ist im gezeigten Ausführungsbeispiel am Rahmen 4 angelenkt und insbesondere zur Verlagerung des Arbeitsgeräts 1 zwischen der Transportstellung und der Arbeitsstellung relativ zum Rahmen 4 rotatorisch verlagerbar.

Ein zweiter Ausleger 3 greift an dem ersten Ausleger 2 an und ist insbesondere zur Überführung des Arbeitsgeräts zwischen der Transportstellung und der Arbeitsstellung sowohl relativ zum Rahmen 4 als auch relativ zum ersten Ausleger 2 verlagerbar. So ist gemäß Fig. 1 der zweite Ausleger 3 relativ zum ersten Ausleger 2 translatorisch verlagerbar und zusammen mit dem ersten Ausleger 2 relativ zum Rahmen 4 rotatorisch verlagerbar.

In der Arbeitsstellung der Fig. 1 ist, bezogen auf den Rahmen 4, durch den sich eine Längsmittelachse des Arbeitsgeräts 1 erstreckt, der erste Ausleger 2 innen und der zweite Ausleger 3 außen angeordnet, sodass der erste Ausleger 2 auch als innerer Ausleger und der zweite Ausleger 3 auch als äußerer Ausleger bezeichnet werden kann.

Im gezeigten Ausführungsbeispiel der Fig. 1, bei welchem es sich bei dem Arbeitsgerät 1 um eine als Kreiselschwader ausgebildete Heuwerbungsmaschine handelt, greift an dem zweiten Ausleger 3 eine Arbeitseinheit 5 an, die als Rechkreisel ausgeführt ist.

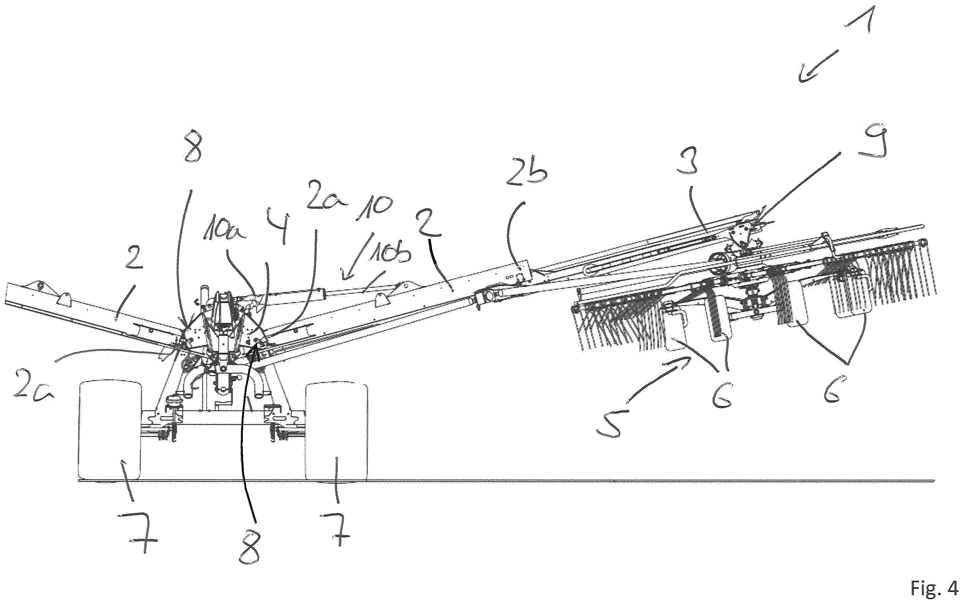

Die Arbeitseinheit 5 kann sich in der Arbeitsstellung (siehe Fig. 1) des landwirtschaftlichen Arbeitsgeräts 1 über Tasträder 6 auf einem zu bearbeitenden Untergrund abstützen. Der Rahmen 4 stützt sich in der Arbeitsstellung (siehe Fig. 1), Transportstellung (siehe Fig. 3) und Vorgewendestellung (siehe Fig. 4) des landwirtschaftlichen Arbeitsgeräts 1 über Laufräder 7 auf einem Untergrund ab. In der Transportstellung (siehe Fig. 3) und Vorgewendestellung (siehe Fig. 4) des landwirtschaftlichen Arbeitsgeräts 1 sind die Tasträder 6 vom Untergrund abgehoben.

Wie bereits ausgeführt, ist der erste, innere Ausleger 2 gegenüber dem Rahmen 4 rotatorisch verlagerbar. So ist der jeweilige erste, innere Ausleger 2 um ein Gelenk 8 relativ zum Rahmen 4 schwenkbar oder klappbar, wobei der jeweilige erste, innere Ausleger 2 vorzugsweise ein starrer Träger ist, der mit einem ersten Ende 2a über das jeweilige Gelenk 8 am Rahmen 4 angelenkt ist.

Der jeweilige zweite, äußere Ausleger 3 ist relativ zum jeweiligen ersten, inneren Ausleger 2 translatorisch verlagerbar, nämlich teleskopierbar. Hierzu ist der jeweilige zweite, äußere Ausleger 4 vorzugsweise ebenfalls wie der erste, innere Ausleger 2 als starrer Träger ausgebildet, der an einem dem ersten Ende 2a des ersten Auslegers 2 gegenüberliegenden zweiten Ende 2b des ersten Auslegers 2 aus dem ersten Ausleger 2 heraus sowie in denselben hinein teleskopierbar ist, sodass demnach der jeweilige zweite, äußere Ausleger 3 am zweiten Ende 2b des jeweiligen ersten, inneren Auslegers 2 gegenüber dem jeweiligen ersten, inneren Ausleger 2 teleskopisch einfahrbar und ausfahrbar ist.

Die jeweilige am jeweiligen zweiten Ausleger 3 gelagerte Arbeitseinheit 5 ist relativ zum jeweiligen zweiten Ausleger 3 translatorisch verlagerbar, wozu die jeweilige Arbeitseinheit 5 vorzugsweise über eine Laufkatze 9 am jeweiligen zweiten Ausleger 3 angreift und über diese Laufkatze 9 relativ zum jeweiligen zweiten Ausleger 3 verlagerbar ist. Details einer solchen Laufkatze 9 sind aus der EP 1 949 781 A1 bekannt.

In der Arbeitsstellung (siehe Fig. 1) des landwirtschaftlichen Arbeitsgeräts 1 ist der jeweilige zweite, äußere Ausleger 3 vorzugsweise nahezu vollständig aus dem jeweiligen ersten, inneren Ausleger 2 ausgefahren, sodass zwischen den beiden Auslegern 2, 3 eine Überdeckung von minimal etwa 400 Millimetern, vorzugsweise eine Überdeckung von minimal etwa 600 Millimetern, besteht. In der Transportstellung (siehe Fig. 3) des langwirtschaftlichen Arbeitsgeräts hingegen, in welcher der jeweilige erste Ausleger 2 um das Gelenk 8 vertikal nach oben geschwenkt ist, ist der jeweilige zweite, äußere Ausleger 3 nahezu vollständig in den jeweiligen ersten, inneren Ausleger 2 einfahren, sodass zwischen den beiden Auslegern 2, 3 in der Transportstellung eine Überdeckung von 50 % bis 70 %, vorzugsweise eine Überdeckung von etwa 100 %, besteht. Dies ist von Vorteil, um einerseits in der Arbeitsstellung eine maximale Arbeitsbreite und andererseits in der Transportstellung möglichst kompakte Abmessungen des landwirtschaftlichen Arbeitsgeräts 1 zu gewährleisten.

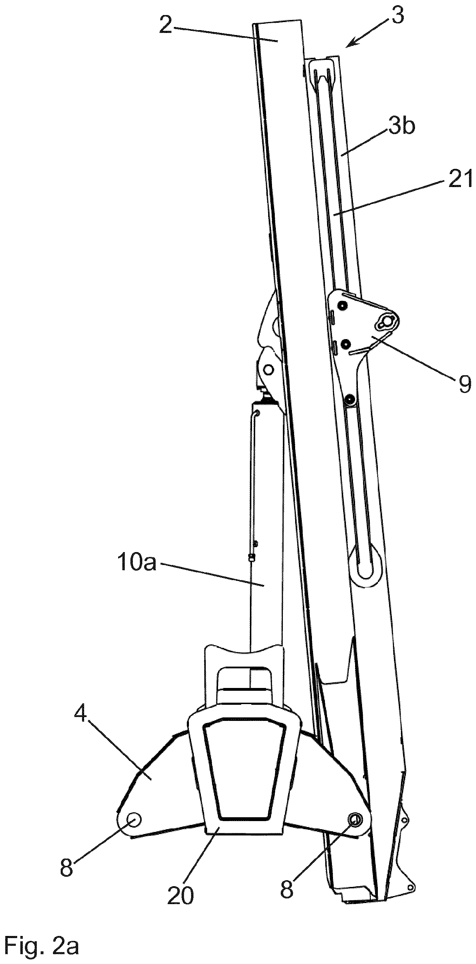

Um eine besonders vorteilhafte Überdeckung des zweiten, äußeren Auslegers 3 mit dem ersten, inneren Ausleger 2 von vorzugsweise etwa 100 % zu erreichen, ist der Querschnitt des ersten, inneren Auslegers 2 vorzugsweise als offenes Profil ausgeführt. Wie in Fig. 2 erkennbar ist, weist der erste, innere Ausleger 2 nach unten eine Öffnung 13 auf, durch welche der zweite, äußere Ausleger 3 zumindest teilweise herausragt. Die Öffnung 13 erstreckt sich vorzugsweise über die gesamte Länge des ersten, inneren Auslegers 2. Der zweite, äußere Ausleger 3 weist vorzugsweise einen T-förmigen Querschnitt auf, wobei ein oberer quer verlaufender Schenkel 3a innerhalb des ersten, inneren Auslegers 2 beidseitig sowie oben und unten, vorzugsweise durch Gleitsteine 12, verschiebbar gelagert ist. Der senkrecht verlaufende Schenkel 3b der T-Form ragt unten aus dem ersten, inneren Ausleger 2 soweit heraus, dass an diesem Schenkel 3b die zuvor erwähnte Laufkatze 9 verschiebbar aufnehmbar ist. Die in dieser Schnittdarstellung nicht sichtbare Laufkatze 9 kann mittels der Kolbenstange 9a translatorisch verlagert werden. Der äußere Ausleger 3 kann mittels der Kolbenstange 11a innerhalb des ersten, inneren Auslegers 2 translatorisch verlagert bzw. verschoben werden.

In Fig. 2a ist der erste, innere Ausleger 2 in der Transportstellung vertikal nach oben geschwenkt dargestellt. Diese Darstellung zeigt einen Schnitt durch einen Längsträger 20 mit Blick auf den Rahmen 4, an welchem die Ausleger 2 an Gelenken 8 angelenkt sind. Zur besseren Übersichtlichkeit wurde auf die Darstellung des zweiten gegenüberliegenden Auslegers sowie der Arbeitseinheit 5 verzichtet. Es ist erkennbar, dass sich die beiden Ausleger 2, 3 vollkommen - also zu 100% - überdecken und an dem - aus dem ersten, inneren Ausleger 2 herausragenden - Schenkel 3b des zweiten, äußeren Auslegers 3, die Laufkatze 9 gelagert ist. Die Laufkatze 9 ist innerhalb einer länglichen Öffnung 21 am Schenkel 3b des zweiten, äußeren Auslegers 3 angeordnet und so geführt, dass sie genügend Abstand zum inneren Ausleger 2 aufweist. Die Laufkatze 9 ist deshalb auch translatorisch beweglich, wenn sich die beiden Ausleger 2, 3 miteinander überdecken. An der Laufkatze 9 ist die Arbeitseinheit 5 - zur Bodenanpassung vorzugsweise kippbeweglich - gelagert.

Die Öffnung 13 des Profils des ersten, inneren Auslegers 2 muss nicht zwangsläufig nach unten gerichtet sein. Es ist auch möglich, die Öffnung 13 beispielsweise seitlich anzuordnen.

Es ist auch möglich, den zweiten äußeren Ausleger 3 als offenes Profil auszuführen, welches innerhalb des ersten, inneren Auslegers 2 geführt wird. Die Laufkatze 9 oder ein anderes Führungselement kann wiederum innerhalb des äußeren Auslegers 3 geführt werden. Der äußere Ausleger 3 weist eine Öffnung auf, durch welche eine Aufnahme zur Befestigung einer Arbeitseinheit 5 herausragen kann.

Auch die Öffnung am zweiten, äußeren Ausleger 3 muss nicht zwangsläufig nach unten gerichtet sein. Es ist auch möglich, die Öffnung beispielsweise seitlich anzuordnen - abgestimmt auf die Öffnung 13 des ersten, inneren Auslegers 2.

Durch die ineinander verschachtelte Anordnung ergibt sich ein besonders vorteilhaft kompakter Aufbau eines zweifach teleskopierbaren Auslegerarms.

Zum Verschwenken des jeweiligen ersten, inneren Auslegers 2 relativ zum Rahmen dient ein Schwenkzylinder oder Klappzylinder 10. Der jeweilige Klappzylinder 10 greift mit einem Zylinder 10a am Rahmen 4 und mit einer Kolbenstange 10b am jeweiligen ersten, inneren Ausleger 2 an. Durch Betätigung des Klappzylinders 10 kann der erste Ausleger 2 um das Gelenk 8 relativ zum Rahmen 4 geschwenkt werden, um denselben anzuheben oder abzusenken.

Zur teleskopischen Verlagerung des jeweiligen zweiten, äußeren Auslegers 3 gegenüber dem jeweiligen ersten, inneren Ausleger 2 dient ein im Detail nicht sichtbarer Teleskopzylinder 11, der vorzugsweise mit einem Zylinder am ersten Ausleger 2 und mit einer Kolbenstange 11 a am zweiten Ausleger 3 angreift.

Dieser Teleskopzylinder 11 ist in Fig. 1, 3 und 4 nicht sichtbar. Fig. 2 zeigt jedoch die Kolbenstange 11a dieses Teleskopzylinders 11, mithilfe dessen der zweite, äußere Ausleger 3 relativ zum ersten, inneren Ausleger 2 teleskopierbar ist.

Ferner zeigt der Querschnitt der Fig. 1 eine Kolbenstange 9a der Laufkatze 9, die der Verlagerung der jeweiligen Arbeitseinheit 5 relativ zum jeweiligen zweiten Ausleger 3 dient.

Fig. 2 zeigt Gleitsteine 12, die der gleitenden Lagerung des jeweiligen zweiten, äußeren Auslegers 3 im jeweiligen ersten, inneren Ausleger 2 dienen, um eine reibungsminimierte Teleskopierbarkeit dieser Ausleger 2, 3 relativ zueinander zu ermöglichen.

Bei dem erfindungsgemäßen landwirtschaftlichen Arbeitsgerät 1 kann in der Arbeitsstellung (siehe Fig. 1) eine maximale Arbeitsbreite realisiert werden. Hierzu wird der jeweilige erste, innere Ausleger 2 um das Gelenk 8 relativ zum Rahmen 4 nach unten geschwenkt. Ferner wird hierzu der jeweilige zweite, äußere Ausleger 3 teleskopisch aus dem jeweiligen ersten, inneren Ausleger 2 ausgefahren. Darüber hinaus wird die jeweilige Arbeitseinheit 5 über die jeweilige Laufkatze 9 nach maximal außen relativ zum jeweiligen zweiten, äußeren Ausleger 3 verlagert.

Eine gegenüber der maximalen Arbeitsbreite schmalere Arbeitsbreite kann durch Einfahren des zweiten, äußeren Auslegers 3 und / oder durch Einfahren der Laufkatze 9 eingestellt werden.

Durch die erfindungsgemäße Anordnung der Ausleger 2, 3 und der Laufkatze 9 kann eine besonders kleine minimale Arbeitsbreite eingestellt werden, so dass in der Arbeitsposition besonders vorteilhaft auch durch Engstellen, wie beispielsweise zwischen Bäumen oder anderen Hindernissen, hindurchgefahren werden kann. Dadurch können vorteilhaft auch Flächen an Engstellen bearbeitet werden, die ansonsten unbearbeitet bleiben würden.

Zur Gewährleistung einer Vorgewendestellung (siehe Fig. 4) können die ersten, inneren Ausleger 2 über den Klappzylinder 10 angehoben werden, und zwar bei ausgefahrenem zweiten Ausleger 3 und ausgefahrenen Arbeitseinheiten 5.

Um eine möglichst kompakte Transportstellung zu gewährleisten, ist der jeweilige erste, innere Ausleger 2 um in etwa 90° aus der Arbeitsstellung heraus nach oben um das Gelenk 8 relativ zum Rahmen 4 klappbar. Der jeweilige zweite, äußere Ausleger 3 wird maximal in den ersten, inneren Ausleger 2 teleskopisch eingefahren. Die jeweilige Arbeitseinheit 5 wird über die Laufkatze 9 ebenfalls maximal eingefahren und demnach in der Transportstellung (siehe Fig. 3) maximal abgesenkt.

Das erfindungsgemäße landwirtschaftliche Arbeitsgerät gewährleistet bei einfachem Aufbau und kompakter Bauweise eine große Arbeitsbreite und in der Transportstellung kompakte Abmessungen.

Die Erfindung kommt vorzugsweise bei als Kreiselschwadern ausgebildeten Heuwerbungsmaschinen zum Einsatz.

Die Erfindung kann jedoch auch bei anderen Schwadern, Mähwerken oder sonstigen landwirtschaftlichen Arbeitsgeräten genutzt werden.

### Bezugszeichenliste

- 1: Arbeitsgerät
- 2: Ausleger
- 2a: erstes Ende
- 2b: zweites Ende
- 3: Ausleger
- 3a: Schenkel
- 3b: Schenkel
- 4: Rahmen
- 5: Arbeitseinheit
- 6: Tastrad
- 7: Laufrad
- 8: Gelenk
- 9: Laufkatze
- 9a: Kolbenstange
- 10: Klappzylinder
- 10a: Zylinder
- 10b: Kolbenstange
- 11: Teleskopzylinder
- 11a: Kolbenstange
- 12: Gleitstein
- 13: Öffnung

- 20: Längsträger
- 21: Öffnung

## Patentansprüche

1. Landwirtschaftliches Arbeitsgerät (1),
mit einem Rahmen (4),
mit mindestens einem ersten Ausleger (2), der insbesondere zur Überführung des Arbeitsgeräts zwischen einer Transportstellung und einer Arbeitsstellung relativ zum Rahmen (4) verlagerbar ist,
mit mindestens einem zweiten Ausleger (3), der an einem jeweiligen ersten Ausleger (2) angreift und insbesondere zur Überführung des Arbeitsgeräts zwischen der Transportstellung und der Arbeitsstellung relativ zum Rahmen (4) und relativ zum jeweiligen ersten Ausleger (2) verlagerbar ist,
wobei zumindest der jeweilige zweite Ausleger (3) mindestens eine Arbeitseinheit (5) trägt, wobei
der jeweilige erste Ausleger (2) um ein Gelenk (8) relativ zum Rahmen (4) schwenkbar oder klappbar ist,
der jeweilige zweite Ausleger (3) relativ zum jeweiligen ersten Ausleger (2) translatorisch verlagerbar, nämlich teleskopierbar, ist,
die jeweilige am jeweiligen zweiten Ausleger (3) gelagerte Arbeitseinheit (5) relativ zum jeweiligen zweiten Ausleger (3) translatorisch verlagerbar ist, **dadurch gekennzeichnet, dass** der jeweilige erste Ausleger (2) als offenes Profil ausgeführt ist, welches eine Öffnung (13) aufweist und der translatorisch verlagerbare zweite Ausleger (3) so im Inneren des ersten Auslegers (2) geführt ist, dass zumindest ein Teil (3b) des zweiten Auslegers (3) aus dieser Öffnung (13) herausragt und daran eine Laufkatze (9) verlagerbar angeordnet ist und an der Laufkatze (9) die Arbeitseinheit (5) gelagert ist.

2. Landwirtschaftliches Arbeitsgerät nach Anspruch 1, **dadurch gekennzeichnet, dass** der jeweilige erste Ausleger (2) ein starrer Träger ist, der mit einem ersten Ende (2a) über das jeweilige Gelenk (8) am Rahmen (4) angelenkt ist, und an dessen gegenüberliegendem zweiten Ende (2b) der jeweilige zweite Ausleger (3) teleskopierbar ist.

3. Landwirtschaftliches Arbeitsgerät nach Anspruch 2, **dadurch gekennzeichnet, dass** der jeweilige zweite Ausleger (3) ein starrer Träger ist, der am zweiten Ende (2b) des jeweiligen ersten Auslegers (2) gegenüber dem jeweiligen ersten Ausleger (2) teleskopisch einfahrbar und ausfahrbar ist.

4. Landwirtschaftliches Arbeitsgerät nach einem der Ansprüche 1 bis 3, **dadurch gekennzeichnet, dass** der jeweilige erste Ausleger (2) als offenes Profil ausgeführt ist, welches eine Öffnung (13) aufweist und der translatorisch verlagerbare zweite, äußere Ausleger (3) auch als offenes Profil ausgeführt ist und im Inneren des ersten Auslegers (2) geführt ist, wobei im Inneren des zweiten, äußeren Auslegers (3) eine Laufkatze (9) oder ein anderes Führungselement translatorisch beweglich führbar ist, an welcher bzw. welchem die Arbeitseinheit (5) befestigbar ist.

5. Landwirtschaftliches Arbeitsgerät nach einem der Ansprüche 1 bis 4, **dadurch gekennzeichnet, dass** an dem jeweiligen ersten Ausleger (2) und an dem Rahmen (4) ein Schwenkzylinder oder Klappzylinder (10) angreift.

6. Landwirtschaftliches Arbeitsgerät nach Anspruch 5, **dadurch gekennzeichnet, dass** der Schwenkzylinder oder Klappzylinder (10) mit einem Zylinder (10a) am Rahmen (4) und mit einer Kolbenstange (10b) am jeweiligen ersten Ausleger (2) angreift.

7. Landwirtschaftliches Arbeitsgerät nach einem der Ansprüche 1 bis 6, **dadurch gekennzeichnet, dass** an dem jeweiligen zweiten Ausleger (3) und an dem jeweiligen ersten Ausleger (2) ein Teleskopzylinder (11) angreift.

8. Landwirtschaftliches Arbeitsgerät nach Anspruch 7, **dadurch gekennzeichnet, dass** der Teleskopzylinder (11) mit einem Zylinder am ersten Ausleger (2) und mit einer Kolbenstange (11a) am zweiten Ausleger (3) angreift.

9. Landwirtschaftliches Arbeitsgerät nach einem der Ansprüche 1 bis 8, **dadurch gekennzeichnet, dass** in der Transportstellung der jeweilige zweite Ausleger (3) derart in den jeweiligen ersten Ausleger (2) eingefahren ist, dass zwischen denselben eine Überdeckung von etwa 50 % bis 70 %, vorzugsweise von etwa 100 %, besteht.

10. Landwirtschaftliches Arbeitsgerät nach einem der Ansprüche 1 bis 9, **dadurch gekennzeichnet, dass** in der Arbeitsstellung der jeweilige zweite Ausleger (3) derart aus dem jeweiligen ersten Ausleger (2) ausgefahren ist, dass zwischen denselben eine Überdeckung von minimal etwa 400 Millimetern, vorzugsweise von minimal etwa 600 Millimetern, besteht.

11. Landwirtschaftliches Arbeitsgerät nach einem der Ansprüche 1 bis 10, **dadurch gekennzeichnet, dass** dasselbe als Heuwerbungsmaschine, insbesondere als Kreiselschwader, ausgebildet ist.

## Claims

1. Agricultural implement (1)
having a frame (4),
having at least one first boom (2), which is displaceable relative to the frame (4) in particular to transfer the implement between a transport position and a working position,
having at least one second boom (3), which acts on a respective first boom (2) and is displaceable relative to the frame (4) and relative to the respective first boom (2) in particular to transfer the implement between the transport position and the working position,
wherein at least the respective second boom (3) carries at least one working unit (5), wherein
the respective first boom (2) is able to be pivoted or folded about a joint (8) relative to the frame (4),
the respective second boom (3) is displaceable in translation, namely is telescopic, relative to the respective first boom (2),
the respective working unit (5) mounted on the respective second boom (3) is displaceable in translation relative to the respective second boom (3), **characterized in that** the respective first boom (2) is embodied as an open profile which has an opening (13) and the second boom (3), which is displaceable in translation, is guided inside the first boom (2) such that at least a part (3b) of the second boom (3) projects out of this opening (13) and a trolley (9) is arranged in a displaceable manner thereon and the working unit (5) is mounted on the trolley (9).

2. Agricultural implement according to Claim 1, **characterized in that** the respective first boom (2) is a rigid beam which is hinged to the frame (4) via the respective joint (8) by a first end (2a) and at the opposite second end (2b) of which the respective second boom (3) is arranged in a telescopic manner.

3. Agricultural implement according to Claim 2, **characterized in that** the respective second boom (3) is a rigid beam which is retractable and extendable in a telescopic manner with respect to the respective first boom (2) at the second end (2b) of the respective first boom (2).

4. Agricultural implement according to one of Claims 1 to 3, **characterized in that** the respective first boom (2) is embodied as an open profile which has an opening (13), and the second, outer boom (3), which is displaceable in translation, is also embodied as an open profile and is guided inside the first boom (2), wherein, inside the second, outer boom (3), a trolley (9) or some other guide element is able to be guided so as to be movable in translation, the working unit (5) being able to be fastened thereto.

5. Agricultural implement according to one of Claims 1 to 4, **characterized in that** a pivoting cylinder or folding cylinder (10) acts on the respective first boom (2) and on the frame (4).

6. Agricultural implement according to Claim 5, **characterized in that** the pivoting cylinder or folding cylinder (10) acts on the frame (4) with a cylinder (10a) and on the respective first boom (2) with a piston rod (10b).

7. Agricultural implement according to one of Claims 1 to 6, **characterized in that** a telescopic cylinder (11) acts on the respective second boom (3) and on the respective first boom (2).

8. Agricultural implement according to Claim 7, **characterized in that** the telescopic cylinder (11) acts on the first boom (2) with a cylinder and on the second boom (3) with a piston rod (11a).

9. Agricultural implement according to one of Claims 1 to 8, **characterized in that,** in the transport position, the respective second boom (3) has been retracted into the respective first boom (2) such that they overlap by about 50% to 70%, preferably by about 100%.

10. Agricultural implement according to one of Claims 1 to 9, **characterized in that,** in the working position, the respective second boom (3) has been extended out of the respective first boom (2) such that they overlap by a minimum of about 400 millimetres, preferably by a minimum of about 600 millimetres.

11. Agricultural implement according to one of Claims 1 to 10, **characterized in that** this is configured as a haymaking machine, in particular as a rotary rake.

## Revendications

1. Appareil de travail agricole (1),
muni d'un cadre (4),
muni d'au moins un premier bras (2), qui est déplaçable relativement au cadre (4) notamment pour le transfert de l'appareil de travail entre une position de transport et une position de travail,
muni d'au moins un deuxième bras (3), qui agit sur un premier bras respectif (2) et est déplaçable relativement au cadre (4) et relativement au premier bras respectif (2) notamment pour le transfert de l'appareil de travail entre la position de transport et la position de travail,
au moins le deuxième bras respectif (3) portant au moins une unité de travail (5),
le premier bras respectif (2) étant pivotable ou basculable autour d'une articulation (8) relativement au cadre (4),
le deuxième bras respectif (3) étant déplaçable par translation, à savoir télescopable, relativement au premier bras respectif (2),
l'unité de travail respective (5) montée sur le deuxième bras respectif (3) étant déplaçable par translation relativement au deuxième bras respectif (3), **caractérisé en ce que** le premier bras respectif (2) est conçu en tant que profilé ouvert, qui comprend une ouverture (13) et le deuxième bras déplaçable par translation (3) est guidé à l'intérieur du premier bras (2) de telle sorte qu'au moins une partie (3b) du deuxième bras (3) dépasse hors de cette ouverture (13) et un chariot roulant (9) y est agencé de manière déplaçable et l'unité de travail (5) est montée sur le chariot roulant (9).

2. Appareil de travail agricole selon la revendication 1, **caractérisé en ce que** le premier bras respectif (2) est un support rigide, qui est articulé sur le cadre (4) avec une première extrémité (2a) par l'intermédiaire de l'articulation respective (8), et à la deuxième extrémité opposée (2b) duquel le deuxième bras respectif (3) est télescopable.

3. Appareil de travail agricole selon la revendication 2, **caractérisé en ce que** le deuxième bras respectif (3) est un support rigide, qui peut être rentré et sorti télescopiquement à la deuxième extrémité (2b) du premier bras respectif (2) par rapport au premier bras respectif (2).

4. Appareil de travail agricole selon l'une quelconque des revendications 1 à 3, **caractérisé en ce que** le premier bras respectif (2) est conçu en tant que profilé ouvert, qui comprend une ouverture (13), et le deuxième bras extérieur déplaçable par translation (3) est également conçu en tant que profilé ouvert et est guidé à l'intérieur du premier bras (2), un chariot roulant (9) ou un autre élément de guidage pouvant être guidé de manière mobile par translation à l'intérieur du deuxième bras extérieur (3), sur lequel l'unité de travail (5) peut être fixée.

5. Appareil de travail agricole selon l'une quelconque des revendications 1 à 4, **caractérisé en ce qu'un** cylindre de pivotement ou un cylindre de basculement (10) agit sur le premier bras respectif (2) et sur le cadre (4).

6. Appareil de travail agricole selon la revendication 5, **caractérisé en ce que** le cylindre de pivotement ou le cylindre de basculement (10) agit avec un cylindre (10a) sur le cadre (4) et avec une tige de piston (10b) sur le premier bras respectif (2).

7. Appareil de travail agricole selon l'une quelconque des revendications 1 à 6, **caractérisé en ce qu'**un cylindre de télescopage (11) agit sur le deuxième bras respectif (3) et sur le premier bras respectif (2) .

8. Appareil de travail agricole selon la revendication 7, **caractérisé en ce que** le cylindre de télescopage (11) agit avec un cylindre sur le premier bras (2) et avec une tige de piston (11a) sur le deuxième bras (3).

9. Appareil de travail agricole selon l'une quelconque des revendications 1 à 8, **caractérisé en ce que,** dans la position de transport, le deuxième bras respectif (3) est rentré dans le premier bras respectif (2) de telle sorte qu'un recouvrement d'environ 50 % à 70 %, de préférence d'environ 100 %, existe entre eux.

10. Appareil de travail agricole selon l'une quelconque des revendications 1 à 9, **caractérisé en ce que,** dans la position de travail, le deuxième bras respectif (3) est sorti hors du premier bras respectif (2) de telle sorte qu'un recouvrement d'au minimum environ 400 millimètres, de préférence d'au minimum environ 600 millimètres, existe entre eux.

11. Appareil de travail agricole selon l'une quelconque des revendications 1 à 10, **caractérisé en ce que** celui-ci est configuré en tant que machine de fenaison, notamment en tant qu'andaineuse.
